# FASCICULE DE BREVET EUROPEEN

(11) **EP 1 162 091 B1**
(45) Date de publication et mention de la délivrance du brevet: **06.05.2004**
(21) Numéro de dépôt: 01401420.3
(22) Date de dépôt: 31.05.2001
(51) Int. Cl.: B60G 15/06, F16C 33/76

(54) **Roulement étanche pour butée de suspension**
Abgedichtetes Axialwälzlager für Fahrzeugaufhängung
Sealed axial bearing for a vehicle suspension

(30) Priorité: 07.06.2000 FR 0007296
(43) Date de publication de la demande: 12.12.2001
(73) Titulaire: SKF FRANCE, F-92140 Clamart (FR)
(72) Inventeur: Beghini, Eric, 37390 La Membrolle (FR); Houdayer, Christophe, 37000 Tours (FR); Collognat, Jean-Pierre, Northville, MI 48167 (US)
(74) Mandataire: Casalonga, Axel

(56) Documents cités:
- EP-A- 1 000 781
- DE-A- 19 752 268
- FR-A- 2 579 697
- US-A- 4 995 737

## Description

La présente invention concerne le domaine des butées de suspension utilisées en particulier sur les véhicules automobiles dans les jambes de suspension télescopiques des roues directrices.

Une butée de suspension comprend généralement une bague supérieure et une bague inférieure entre lesquelles sont disposés des éléments roulants, sous la forme de billes ou de rouleaux.

L'invention concerne plus particulièrement les butées de suspension comprenant au moins un capot en matière synthétique en contact avec l'une des deux bagues du roulement.

De façon connue en soi, la butée de suspension est disposée dans la partie supérieure de la jambe de suspension, entre une coupelle inférieure métallique, servant également de siège d'appui pour un ressort de suspension, et un élément supérieur solidaire de la caisse du véhicule. Le ressort du dispositif de suspension est installé autour de la tige du piston d'amortisseur dont l'extrémité est solidaire d'un bloc-support élastique. Le roulement de butée de suspension permet un mouvement de rotation entre la coupelle d'appui du ressort, mobile en rotation, et le bloc-support élastique qui est fixé à la caisse du véhicule. La butée de suspension permet également de transmettre les efforts axiaux entre le ressort et la caisse du véhicule. Le mouvement angulaire relatif entre la coupelle d'appui du ressort et le bloc-support élastique découle d'un braquage de la roue directrice et/ou la compression du ressort de suspension. On peut se référer au document français n° 2 779 096.

Les roulements de butée de suspension sont situés sous la caisse du véhicule et à proximité immédiate des roues qui projettent, notamment par temps de pluie, des éléments polluants susceptibles de rentrer dans le roulement.

On peut utiliser de manière connue en soi, comme dans les documents US 4 995 737 ou EP-A-390 331, un dispositif utilisant un ou deux capots en matière plastique, chaque capot venant coiffer une bague et possédant des moyens de retenue axiale coopérant avec l'autre capot. L'étanchéité est alors assurée par des lèvres issues de l'un des capots et venant frotter sur l'autre capot.

Les capots sont généralement réalisés en matière plastique chargée de fibres de verre pour leur conférer la résistance et la rigidité nécessaires. Ce matériau s'avère trop rigide pour constituer une étanchéité suffisamment efficace. On peut également envisager de disposer des joints d'étanchéité par emmanchement sur les bagues du roulement, mais dans ce cas on doit utiliser les joints avec armature métallique, ce qui est relativement onéreux à réaliser, voir le document JP 08-219 150.

Un dispositif de roulement de butée de suspension, correspondant au préambule de la revendication 1, est connu du document EP 1000 781 A1.

L'invention propose un roulement de butée de suspension à haut niveau d'étanchéité tout en restant compact et indémontable accidentellement pendant les manipulations ou les transports précédent son installation à demeure dans la jambe de suspension.

Le dispositif de roulement de butée de suspension, selon un aspect de l'invention, est tel que décrit par la revendication 1.

Ladite portée peut être une surface sensiblement radiale.

De préférence, le joint est pourvu d'un talon disposé et fixé dans une rainure annulaire du capot. Ladite rainure peut présenter un diamètre sensiblement égal au diamètre extérieur de la rangée d'éléments roulants.

Dans un mode de réalisation de l'invention, la première bague comprend une portion radiale venant recouvrir partiellement le talon. La portion radiale verrouille le talon dans la rainure.

Dans un mode de réalisation de l'invention, ladite surface de la bague tournante est adjacente à une surface concave formant chemin de roulement pour les éléments roulants.

Dans un mode de réalisation de l'invention, le capot est pourvu de moyens de solidarisation axiale avec la bague tournante.

Dans un mode de réalisation de l'invention, le capot est pourvu de moyens de solidarisation axiale avec l'autre capot.

Dans un mode de réalisation de l'invention, la lèvre du joint d'étanchéité s'étend radialement vers l'extérieur à partir du talon.

Dans un mode de réalisation de l'invention, la lèvre du joint d'étanchéité s'étend vers le bas à partir du talon, à l'état monté du dispositif.

Avantageusement, le joint d'étanchéité est disposé radialement entre les éléments roulants et une jupe sensiblement axiale. La jupe peut faire partie du capot.

Dans un mode de réalisation de l'invention, la jupe comprend des moyens de retenue de la deuxième bague ou de l'autre capot solidaire de la deuxième bague.

On réalise un roulement de butée de suspension dont l'encombrement tant axial que radial n'est pas modifié par rapport aux roulements connus, et qui possède une excellente étanchéité et des moyens de retenue de ces différents éléments les uns avec les autres.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :

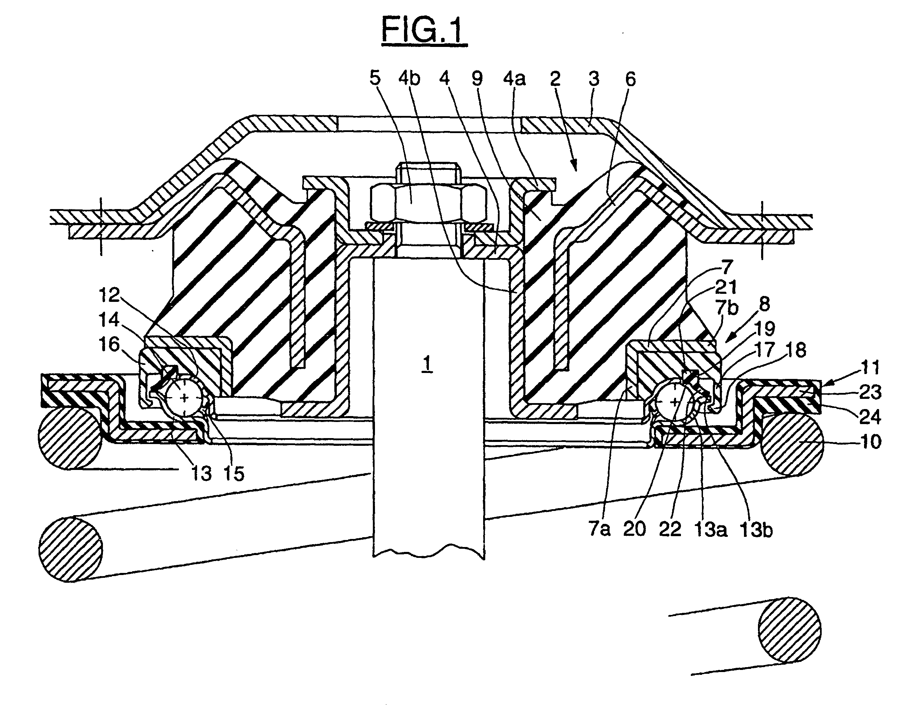

- la figure 1 est une vue en coupe axiale d'un roulement de butée de suspension à l'état monté;
- la figure 2 est une vue de détail de la figure 1; et
- les figures 3 et 4 montrent des variantes.

Un amortisseur comprend un cylindre dans lequel peut coulisser un piston dont la tige 1 est liée par son extrémité supérieure à un bloc-support élastique 2, qui vient en appui dans un élément du châssis 3 formant siège et est solidarisé avec celui-ci.

Le bloc-support élastique 2 comprend :
- un élément de liaison intérieur 4, réalisé en deux parties 4a et 4b, sur lequel vient se monter l'extrémité de la tige 1 du piston d'amortisseur au moyen d'un écrou 5,
- un élément de liaison extérieur 6 servant à la solidarisation avec le châssis 3,
- une coupelle supérieure 7 servant de siège d'appui pour le roulement de butée 8,
- un bloc de caoutchouc 9 adhérisé à la surface de ces trois pièces et réalisant une liaison entre celles-ci avec filtration des vibrations.

L'élément de liaison extérieur 6 est, à une extrémité, fixé au châssis 3, par exemple par vissage ou boulonnage, et, à l'autre extrémité, est disposé axialement entre les deux parties 4a et 4b. La coupelle supérieure 7 est disposée axialement au niveau de l'élément de liaison intérieur 4, mais est de diamètre supérieur. On voit également le ressort de suspension 10 dont l'extrémité supérieure s'appuie sur la coupelle inférieure 11 qui, à son tour, s'appuie sur le roulement de butée 8.

La coupelle supérieure 7 comprend une portion cylindrique 7a s'étendant vers le bas, à l'opposé du châssis 3, et une portion radiale 7b s'étendant vers l'extérieur. La surface intérieure de la portion cylindrique 7a et la surface supérieure de la portion radiale 7b sont recouvertes par le matériau élastique utilisé dans le bloc-support élastique 2.

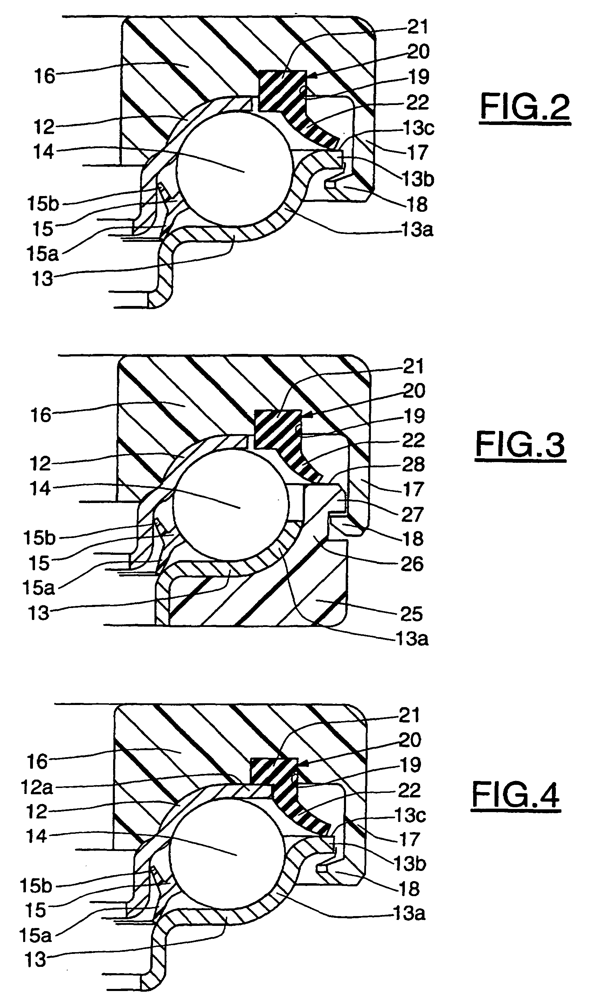

La butée de suspension 8, proprement dite, est mieux visible sur la figure 2 et comprend une bague supérieure 12, et une bague inférieure 13, toutes deux en tôle, entre lesquelles sont logées les billes 14. Les billes 14 sont maintenues par une cage 15 en matériau synthétique, qui se prolonge d'un côté par une lèvre d'étanchéité 15a venant frotter sur la bague inférieure 13 et de l'autre côté par une lèvre 15b venant frotter sur une portée de la bague supérieure 12.

Le roulement de butée 8 comprend, en outre, un capot supérieur 16, en matériau synthétique tel qu'un polyamide chargé de fibres de verre, recouvrant la surface de la bague supérieure 12 à l'opposé des éléments roulants 14 et en concordance de forme avec la surface extérieure de la portion axiale 7a et la surface inférieure de la portion radiale 7b de la coupelle supérieure 7. Le capot supérieur 16 comprend une jupe sensiblement tubulaire 17 s'étendant vers le bas à partir de son bord de grand diamètre et entourant radialement au moins en partie les éléments roulants 14. Sur l'alésage de la jupe 17, à proximité de son extrémité libre inférieure, sont formées des protubérances radiales 18 en saillie vers l'intérieur et formant crochets.

La bague inférieure 13 comprend une portion toroïdale 13a présentant une surface concave adaptée aux éléments roulants 14 et une portion radiale 13b prolongeant vers l'extérieur la portion toroïdale 13a et située sensiblement à mi-hauteur des éléments roulants. L'extrémité libre de la portion radiale 13b est de diamètre supérieur au diamètre du cercle inscrit sur le sommet des crochets 18. Ainsi, les crochets 18 sont aptes à retenir axialement la bague inférieure 13 par rapport au reste du roulement de butée avant le montage définitif dans l'ensemble de suspension.

On pourrait bien sûr remplacer les crochets 18 par un bourrelet annulaire continu en saillie radialement vers l'intérieur.

Le capot supérieur 16 comprend en outre une rainure annulaire 19 à fond sensiblement radial et à bords sensiblement axiaux formés à proximité de l'extrémité libre de grand diamètre de la bague supérieure 12, à un niveau supérieur à celui des éléments roulants 14. La rainure 19 présente un diamètre supérieur à celui du cercle fictif formé par le centre des éléments roulants 14.

Le roulement de butée 8 se complète par un joint d'étanchéité 20, réalisé par exemple en caoutchouc, comprenant un talon 21 emmanché dans la rainure 19 et une lèvre 22 s'étendant à la fois vers le bas et radialement vers l'extérieur à partir du talon 21 et venant en contact de frottement avec une portée constituée par la surface supérieure 13c de la portion radiale 13b de la bague inférieure 13. La surface 13c est annulaire et sensiblement radiale. On pourrait toutefois concevoir qu'elle soit inclinée.

Du côté extérieur des éléments roulants 14, l'étanchéité est donc assurée, d'une part, par le passage étroit formé entre la jupe 17 du capot supérieur 16 et l'extrémité libre de la portion radiale 13b de la bague inférieure 13, et, d'autre part, par le contact entre la lèvre d'étanchéité 22 et ladite portion radiale 13b de la bague inférieure 13. On obtient ainsi une étanchéité de très haute qualité. Du côté intérieur des éléments roulants 14, l'étanchéité est assurée par les lèvres 15a et 15b issues de la cage 15 et en contact respectivement avec la bague inférieure 13 et la bague supérieure 12. Là encore, on obtient une étanchéité efficace.

La bague inférieure 13 du roulement de butée 8 est en appui sur la coupelle inférieure 11 qui comprend une armature métallique 23 recouverte d'une partie en matériau synthétique 24 assurant, elle aussi, la filtration de vibrations susceptibles de remonter en provenance des roues du véhicule vers la caisse.

Sur la figure 3, est illustrée une variante, dans laquelle le roulement est disposé entre un capot supérieur 16 et un capot inférieur 25. Le capot inférieur 25, destiné à venir en appui sur la coupelle d'appui du ressort 11, est pourvu d'une extension axiale 26 s'étendant vers le haut entre les éléments roulants 14 et la jupe 17 du capot 16. L'extension axiale 26 est pourvue d'un bourrelet annulaire 27 dirigé radialement vers l'extérieur apte à coopérer avec le bourrelet ou les crochets 18 de la jupe 17 et à assurer la retenue axiale mutuelle du capot supérieur 16 et du capot inférieur 25.

La surface supérieure annulaire 28 de la protubérance 26 sert de portée d'appui à la lèvre 22 du joint d'étanchéité 20. La surface 28 est ici radiale mais pourrait être oblique. La bague inférieure 13 est ici plus courte que dans le mode de réalisation précédent et dépourvue de portion cylindrique prolongeant vers l'extérieur la portion concave 13a. La bague supérieure 12 possède une extrémité libre qui affleure le bord intérieur de la rainure 19 et est donc en contact avec le talon 21 du joint 20.

Dans le mode de réalisation de la figure 4, la bague supérieure 12 se prolonge radialement vers l'extérieur, vient partiellement recouvrir le talon 21 du joint d'étanchéité 20 et le verrouille dans la rainure 19 en empêchant tout démontage. Ce mode de réalisation est particulièrement efficace lors des manipulations précédant le montage définitif.

Le fait que le joint d'étanchéité 20 soit distinct du capot supérieur 16, permet de réaliser le capot supérieur 16 dans un matériau de haute rigidité, par exemple armé de fibres, notamment de verre, et le joint d'étanchéité 20 en matériau présentant la souplesse souhaitée pour une étanchéité efficace, par exemple en élastomère ou en matière plastique très souple et non chargée de fibres de verre. L'emmanchement du joint d'étanchéité 20 dans la rainure 19 garantit un maintien fiable dudit joint d'étanchéité 20.

A titre de variante de la figure 3, on pourrait concevoir le capot inférieur 25 pour qu'il puisse également servir de siège d'appui du ressort 10, remplaçant ainsi la coupelle d'appui 11.

A titre de variante de la figure 4, on pourrait concevoir un mode de réalisation dans lequel la bague inférieure 13 fait également office de siège d'appui du ressort 10, remplaçant ainsi la coupelle d'appui 11.

Grâce à l'invention, on bénéficie, dans un encombrement réduit, d'une étanchéité particulièrement performante pour un roulement de butée, tant sur le plan de l'efficacité que sur celui de la durée.

En d'autres termes, la durée de vie et la fiabilité du roulement de butée seront augmentées grâce à l'efficacité de ladite étanchéité et à sa tenue au vieillissement.

## Revendications

1. Dispositif de roulement de butée de suspension (8), du type comprenant une première bague (12), une deuxième bague (13), une rangée d'éléments roulants (14) disposés entre les deux bagues, un capot (16) solidaire de la première bague, et au moins un moyen d'étanchéité solidaire d'un élément tournant ou non tournant et apte à coopérer avec une surface respectivement non tournante ou tournante, le moyen d'étanchéité comprenant un joint (20) monté sur ledit capot et pourvu d'une lèvre (22) ladite lèvre (22) étant en contact de frottement sur une portée formée par une surface de la deuxième bague ou de l'autre capot solidaire de la deuxième bague, **caractérisé par le fait que** le joint est distinct du capot et est pourvu d'un talon (21) emmanché dans une rainure annulaire (19) du capot, le joint étant disposé axialement entre ledit capot et la deuxième bague ou un autre capot solidaire de la deuxième bague.

2. Dispositif suivant la revendication 1, **caractérisé par le fait que** la portée en contact avec la lèvre est une surface sensiblement radiale.

3. Dispositif selon la revendication 2, **caractérisé par le fait que** la première bague comprend une portion radiale (12a) venant recouvrir partiellement le talon.

4. Dispositif selon l'une quelconque des revendications précédentes, **caractérisé par le fait que** ladite surface de la deuxième bague est adjacente à une surface concave formant chemin de roulement pour les éléments roulants.

5. Dispositif selon l'une quelconque des revendications précédentes, **caractérisé par le fait que** le capot est pourvu de moyens de solidarisation axiale avec la deuxième bague.

6. Dispositif selon l'une quelconque des revendications précédentes, **caractérisé par le fait qu'**il comprend un autre capot et que le capot est pourvu de moyens de solidarisation axiale avec l'autre capot.

7. Dispositif selon l'une quelconque des revendications précédentes, **caractérisé par le fait que** la lèvre du joint d'étanchéité s'étend radialement vers l'extérieur à partir du talon.

8. Dispositif selon l'une quelconque des revendications précédentes, **caractérisé par le fait que** la lèvre du joint d'étanchéité s'étend vers le bas à partir du talon, à l'état monté du dispositif.

9. Dispositif selon l'une quelconque des revendications précédentes, **caractérisé par le fait que** le joint d'étanchéité est disposé radialement entre les éléments roulants et une jupe (17) sensiblement axiale.

10. Dispositif selon la revendication 9, **caractérisé par le fait que** la jupe comprend des moyens de retenue de la deuxième bague ou de l'autre capot solidaire de la deuxième bague.

## Claims

1. Suspension thrust bearing (8) of the type including a first race (12), a second race (13), a row of rolling members (14) disposed between the two races, a cap (16) fastened to the first race, and at least one sealing means fastened to a rotary or non-rotary member and able to cooperate with a respectively non-rotary or rotary surface, the sealing means including a seal (20) mounted on the said cap and having a lip (22), the said lip (22) being in rubbing contact with a bearing surface formed by a surface of the second race or of the other cap fastened to the second race, **characterized in that** the seal is separate from the cap and has a bead (21) force-fitted into an annular groove (19) of the cap, the seal being disposed axially between the said cap and the second race or another cap fastened to the second race.

2. Bearing according to Claim 1, **characterized in that** the bearing surface in contact with the lip is a substantially radial surface.

3. Bearing according to Claim 2, **characterized in that** the first race has a radial portion (12a) adapted to partly overlap the bead.

4. Bearing according to any one of the preceding claims, **characterized in that** the said surface of the second race is adjacent to a concave surface forming a raceway for the rolling members.

5. Bearing according to any one of the preceding claims, **characterized in that** the cap has means for fastening it axially to the second race.

6. Bearing according to any one of the preceding claims, **characterized in that** it includes another cap and **in that** the cap has means for fastening it axially to the other cap.

7. Bearing according to any one of the preceding claims, **characterized in that** the lip of the seal extends radially outwards from the bead.

8. Bearing according to any one of the preceding claims, **characterized in that** the lip of the seal extends downwards from the bead in an assembled configuration of the bearing.

9. Bearing according to any one of the preceding claims, **characterized in that** the seal is disposed radially between the rolling members and a substantially axial skirt (17).

10. Bearing according to Claim 9, **characterized in that** the skirt includes means for retaining the second race or the other cap fastened to the second race.

## Patentansprüche

1. Lageranordnung (8) für eine Radaufhängung,
mit einem ersten Ring (12),
mit einem zweiten Ring (13),
mit einer Reihe von Wälzelementen (14), die zwischen den beiden Ringen angeordnet sind,
mit einem Deckel (16), der mit dem ersten Ring fest verbunden ist und
mit wenigstens einem Dichtmittel, das mit einem umlaufenden oder einem stillstehenden Element starr verbunden ist und dazu eingerichtet ist, mit einer entsprechenden stillstehenden oder umlaufenden Fläche zusammen zu wirken,
wobei die Dichtmittel eine Verbindungseinrichtung (20) aufweisen, die an dem Deckel montiert ist, und mit einer Lippe (22) versehen ist, die mit einem Sitz gleitend in Berührung steht, der von einer Fläche des zweiten Rings oder dem anderen Deckel gebildet ist, der mit dem zweiten Ring starr verbunden ist, **dadurch gekennzeichnet,**
**dass** die Verbindungseinrichtung von dem Deckel separat ist und einen Wulst (21) umfasst, der in eine Ringnut (19) des Deckels eingesetzt ist, und
**dass** die Verbindungseinrichtung in axialer Richtung zwischen dem Deckel und dem zweiten Ring oder dem anderen Deckel eingefügt ist, der mit dem zweiten Ring starr verbunden ist.

2. Einrichtung nach Anspruch 1, **dadurch gekennzeichnet, dass** der mit der Lippe in Berührung stehende Sitz eine im Wesentlichen radial sich erstreckende Fläche ist.

3. Einrichtung nach Anspruch 2, **dadurch gekennzeichnet, dass** der erste Ring einen radial sich erstreckenden Abschnitt (12a) aufweist, der zum Teil den Wulst überdeckt.

4. Einrichtung nach einem der vorhergehenden Ansprüche, **dadurch gekennzeichnet, dass** die Fläche des zweiten Rings sich neben einer konkaven Fläche befindet, die eine Laufbahn für die Wälzelemente bildet.

5. Einrichtung nach einem der vorhergehenden Ansprüche, **dadurch gekennzeichnet, dass** der Deckel mit Mitteln zur axialen Befestigung an dem zweiten Ring versehen ist.

6. Einrichtung nach einem der vorhergehenden Ansprüche, **dadurch gekennzeichnet, dass** sie einen weiteren Deckel aufweist und dass der weitere Deckel mit Mitteln zur axialen Befestigung an dem anderen Deckel versehen ist.

7. Einrichtung nach einem der vorhergehenden Ansprüche, **dadurch gekennzeichnet, dass** die Dichtlippe sich ausgehend von dem Wulst im Wesentlichen radial nach außen erstreckt.

8. Einrichtung nach einem der vorhergehenden Ansprüche, **dadurch gekennzeichnet, dass** sich die Dichtlippe im montierten Zustand der Einrichtung ausgehend von dem Wuls nach unten erstreckt.

9. Einrichtung nach einem der vorhergehenden Ansprüche, **dadurch gekennzeichnet, dass** die Dichtstelle in radialer Richtung zwischen den Wälzelementen und einem Kragen (17) angeordnet ist, der im Wesentlichen axial verläuft.

10. Einrichtung nach Anspruch 9, **dadurch gekennzeichnet, dass** der Kragen Haltemittel für den zweiten Ring oder dem anderen Deckel aufweist, der mit dem zweiten Ring starr verbunden ist.
